(19) Europäisches Patentamt
European Patent Office
Office européen des brevets

(11) **EP 1 914 025 B1**

(12) **EUROPEAN PATENT SPECIFICATION**

(45) Date of publication and mention
of the grant of the patent:
**03.10.2018 Bulletin 2018/40**

(51) Int Cl.:
***B21D 51/26*** *(2006.01)* ***B65D 1/00*** *(2006.01)*
***B65D 1/14*** *(2006.01)* ***B65D 83/38*** *(2006.01)*

(21) Application number: **06796476.7**

(22) Date of filing: **10.08.2006**

(86) International application number:
**PCT/JP2006/316117**

(87) International publication number:
**WO 2007/020947 (22.02.2007 Gazette 2007/08)**

(54) **PROCESSES FOR PRODUCING A TWO PIECE CAN**

HERSTELLUNGSVERFAHREN FÜR EINE ZWEITEILIGE DOSE

PROCÉDÉS DE FABRICATION D'UNE BOÎTE EN DEUX PARTIES

(84) Designated Contracting States:
**DE FR GB NL PT**

(30) Priority: **12.08.2005 JP 2005234534**
**12.08.2005 JP 2005234543**
**12.08.2005 JP 2005234544**

(43) Date of publication of application:
**23.04.2008 Bulletin 2008/17**

(73) Proprietor: **JFE Steel Corporation**
**Tokyo, 100-0011 (JP)**

(72) Inventors:
• **KOJIMA, Katsumi**
**Tokyo, 100-0011 (JP)**
• **NISHIHARA, Yuka**
**Tokyo, 100-0011 (JP)**

• **KUBO, Hiroshi**
**Tokyo, 1000011 (JP)**
• **YASUE, Yoshihiko**
**Tokyo, 1000011 (JP)**
• **OSHIMA, Yasuhide**
**Tokyo, 100-0011 (JP)**
• **IWASA, Hiroki**
**Tokyo, 100-0011 (JP)**

(74) Representative: **Henkel, Breuer & Partner**
**Patentanwälte**
**Maximiliansplatz 21**
**80333 München (DE)**

(56) References cited:
**EP-A1- 0 167 183 EP-A1- 1 500 598**
**JP-A- 8 309 465 JP-A- 08 309 465**
**JP-B2- 06 062 168 US-A- 3 818 850**
**US-A1- 2003 046 971**

## Description

TECHNICAL FIELD

The present invention relates to methods for forming a two-piece can used for container of varieties of sprays, including metal container for aerosol.

BACKGROUND ART

Metal containers for aerosol, for example, are largely grouped into three-piece can and two-piece can. The three-piece can has a structure of a can body prepared by joining edges of cylindrically-shaped rectangular sheet, and a can bottom and a can lid (dome top) attached to the respective ends of the can body. The name of the three-piece can comes from the three structural elements of the members. When the three-piece can is used for spraying, the dome top is further equipped with a mounting cap having an ejection valve, (when the term "mounting cap" is used hereinafter, the cap is equipped with the ejection valve). Therefore, when the mounting cap is counted, the number of structural members becomes four. Since, however, beverage cans and food cans which have a can body joining the edges of cylindrically-formed metal sheet are usually called the "three-piece cans", the present invention also names the cans having above structure as the "three-piece cans".

Two-piece can is fabricated by reducing the diameter of the can body, formed into a shape of cylinder integrated with bottom, at the opening end side, and by attaching the mounting cap to the opening. For the spraying use, the two-piece can has only one structural member, or the can body, except for the mounting cap. In some cases the can body is called the one-piece can or monoblock can. Since, however, for beverage cans and food cans, the can having the can body formed into a shape of cylinder integrated with bottom is widely called the "two-piece", the present invention also names the can body having the structure as the "two-piece can".

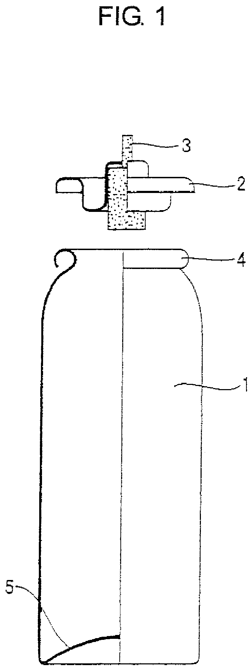

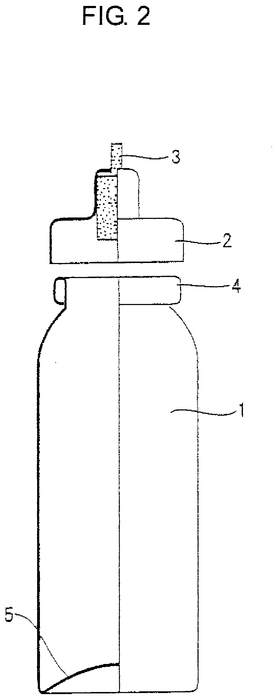

Two-piece can has a seamless can body, and is treated by diametral reduction in a range from the can body toward the mounting cap in smooth and continuous shape. Therefore, compared with the three-piece can, the two-piece can has superior beautifulness in appearance. As a result, two-piece can is widely adopted by the users emphasizing the appearance of package for appealing the product such as aromatic substance, antiperspirant, and hair conditioner. Figure 1 and Fig. 2 show the cross sectional shapes of conventional two-piece cans. Figure 1 shows the two-piece can having the bead in circular arc in cross section, and Fig. 2 shows the one having the bead in vertically long ellipse in cross section. Figures 1 and 2 show the can body 1, the mounting cap 2, the ejection valve 3, the bead 4, and the circular blank 5 before working.

The base material for three-piece can and two-piece can is steel sheet for the three-piece can, and the base material for two-piece can, illustrated in Figs. 1 and 2, is aluminum. The two-piece can adopt aluminum as the base material because aluminum has higher corrosion resistance than that of steel sheet, and because the corrosion resistance to the contents and the rust-generation on outer face raise little problem under exposure of aerosol can to a humid environment. To the contrary, steel sheet has high strength and is inexpensive. Consequently, if steel sheet is applied to aerosol can which needs high pressure strength, the can sheet thickness can be reduced while assuring sufficient can strength, thereby decreasing the base material cost. From the above-consideration, a two-piece can made of a steel sheet having increased corrosion resistance is wanted, and there are studies of fabrication of two-piece cans using a high steel sheet having increased corrosion resistance.

For example, the methods for fabricating two-piece aerosol can using a steel sheet having increased corrosion resistance are disclosed in Patent Document 1 in which the surface of steel sheet is laminated by a metal having high corrosion resistance, in Patent Document 2 in which the surface of steel sheet is laminated by a coating film, and in Patent Document 3 in which the surface of steel sheet is laminated by a film.

Since aluminum is softer than steel sheet, the impact forming, the drawing-redrawing forming, the drawing-redrawing-ironing forming, and the like are used to obtain the shape of aerosol can, specified in Non-Patent Document 1, for instance, to form the can body in a shape of cylinder integrated with bottom, and further to reduce the diameter at the opening end, thereby relatively easily working into the shape of aerosol can. Since, particularly for an aerosol can, the bead has to be formed to attach the mounting cap at the opening end of the can body, the working until forming the bead makes the material work-hardening, thus deteriorating the ductility. When steel sheet which shows larger work-hardening than aluminum is used, cracks likely occur during forming of the bead by the curling caused by poor ductility, and the forming of the bead becomes extremely difficult.

To avoid the difficulty in working, Patent Documents 1, 5, and 6 disclose the methods of forming the bead at the can bottom side, and Patent Document 7 discloses the method of improving the bead-forming method.

[Patent Document 1] JP 63-168238 A
[Patent Document 2] JP 9-39975 A
[Patent Document 3] JP 1-228567 A
[Patent Document 4] JP 10-24973 A
[Patent Document 5] JP 64-62232 A
[Patent Document 6] JP 2004-276068 A
[Patent Document 7] JP 50-129474 A
[Non-Patent Document 1] Federation of European Aerosol Association Standard No. 215, No. 219, and No. 220

Patent Document 1 in which the surface of steel sheet is coated with a metal having high corrosion resistance discloses a technology which uses a steel sheet coated with aluminum, thereby avoiding the rust generation at the can bottom of two-piece aerosol can formed by drawing and ironing. The method may avoid rust generation at the can bottom where the degree of working is small. Since, however, the can body which is subjected to drawing and ironing suffers damage of aluminum coating, the rust generation may occur. Although Patent Document 1 describes both the method in which the bead is formed at opening end side of the can body formed in a shape of cylinder integrated with bottom, and the method in which the bead is formed at the can bottom side. However, Patent Document 1 does not specifically describe the forming of bead, which is difficult in conventional methods.

Patent Document 2 which is the method of coating the surface of steel sheet by a lacquer layer discloses a technology relating to the inside-lacquered metal container having a cured polyamide-imide lacquer layer.

Although the technology is described to be able to use a steel sheet as the base material for two-piece aerosol can, the Examples relating to the steel sheet in the description are only for three-piece cans subjected to small degree of working, and there is no satisfactory description about the corrosion resistance for the steel sheet which is worked into two-piece can subjected to high degree of working, and the effect is not known. In addition, the specification describes that the technology can be applied either to the formed can body or to the metal sheet before working. However, for the case of applying the technology to an aluminum-made two-piece can, given in Examples, the lacquer coating after forming the can body is described, but there is no detail example of the case that the metal sheet before forming is coated with lacquer layer. To this point, according to the investigations conducted by the inventors of the present invention, when a steel sheet coated by a thermally cured lacquer layer was worked into a two-piece aerosol can subjected to a high degree of working, the lacquer layer was damaged by the working, thus failing to attain sufficient corrosion resistance. Furthermore, the Examples disclose only the two-piece can using aluminum, and there is no disclosure about the bead-forming using steel sheet.

In view of corrosion resistance, the method of laminating the surface of steel sheet by a film is a promising one. Patent Document 3 discloses a technology of fabricating an aerosol can using also a steel sheet laminated by a biaxially oriented film of polyethylene terephthalate. According to the technology, since the drawn can body is laminated by a not-damaged laminate film, the corrosion resistance is strong. However, the corrosion resistance on the can body obtained by the technology is maintained only for the can at a small working degree, receiving no diametral reduction at the opening end of the can body, as given in the Examples, and there is no consideration on the corrosion resistance on applying to the can worked into the shape of aerosol can, specified in Non-Patent Document 1. Similarly, the technology does not expect the forming of bead after diametral reduction of the can body.

Patent Document 4 discloses a technology relating to an aerosol can which is fabricated by drawing a steel sheet laminated by a composite film composed of a polypropylene resin layer laminated on both sides of a vinylidene chloride resin layer via an acid-modified polyolefin resin, respectively. Since the technology uses a steel sheet laminated by a film, the can body having high corrosion resistance is expected to be obtained. For the method of drawing, however, detail description of working method is not given, only describing in Examples that an aerosol can having a shape of 45 mm in diameter and 120 mm in height was obtained, and no disclosure of the detail working method is given. In particular, no disclosure is given on the corrosion resistance after diametral reduction at the opening end of the can body, and on the forming of bead.

Forming of bead at the opening end of the cylinder integrated with bottom is difficult as described above. To this point, Patent Documents 1, 5, and 6 disclose the method to form the bead at can bottom side. Since the can bottom side is a portion of small degree of working during working step, and since the work-hardening and the deterioration in ductility of material are small, the forming of bead at that portion is relatively easy. Since, however, the method attaches the can bottom of separate member to the can body by seaming, the beautiful appearance of two-piece can is deteriorated, thus the method is not necessarily a preferable one.

Patent Document 7 discloses a method applying roll-working through the steps from the diametral reduction at the opening end side of the can body to the forming of the bead. Use of successive deforming process by the roll working is expected as effective for forming work owing to easily avoiding crack generation at the bead, and the like. Since, however, the successive deforming results in slow working speed of rolling work, and when the rolling work is applied to a wide zone containing the diametral reduction part, as in the case of Patent Document 7, a long working time is required, and there arises a problem of deteriorated productivity of the can body. Furthermore, when the rolling work is given to a laminated steel sheet which is advantageous in corrosion resistance over a wide zone as in the case of Patent Document 7 and at a high degree of working, there arises a problem of damaging of the film caused by a rolling work tool.

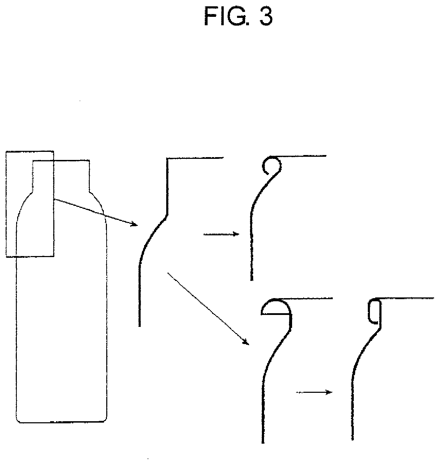

As described above, there was no available method of using a laminated steel sheet and forming the bead after the diametral reduction of the can body in a shape of a cylinder integrated with a bottom. Furthermore, when the cross sectional shape of the bead is not a simple circular arc but a flat ellipse, the forming work of the bead becomes further difficult. According to the conventional technologies, when forming a bead in a shape of a flat ellipse in cross section, as illustrated in Fig. 2, the first stage of working is to form the bead in a circular shape by the curling method, and then the second stage of working is to re-form the bead to the target flat elliptical shape. Figure 3 illustrates the conventional forming method of the bead in a shape of a flat ellipse. According to Fig. 3, the radius of curvature of the curling in the first stage is required to be selected larger than the curvature of a flat ellipse, which increases the degree of working at the tip of the curled part, thereby likely inducing a crack at the portion.

Responding to the above situations, an object of the present invention is to provide a two-piece can having sufficient can strength and high corrosion resistance using a laminated steel sheet which is high in strength, relatively inexpensive, and high in corrosion resistance, and an issue of the present invention is to provide a forming method which easily manufactures the two-piece can without generating cracks.

Through studies to solve the above problems, the present invention has been perfected with the characteristics described below. First, the can strength of a two-piece can becomes sufficient at a low cost by using a laminated steel sheet high in strength, relatively inexpensive, and high in corrosion resistance as the base material of the two-piece aerosol can, and secondly, the forming of a bead, which is difficult to form when steel sheet is used as the base material of the two-piece can, is actualized by the improvement in the structure of the bead and in the forming method.

JP 08 309465 A describes a two-piece can that has a bead formed at the upper open end of the cylindrical can body. The bead has, at a tip end of the opening, an end section that is outward curled in a half circular arc. The bead is also elongated up to a certain semi-finished stage. The document describes, for the purpose of fixing a cap or lid to the can body, a particular manner of forming a hermetic seal in that the lower end of the elongated bead of the semi-finished stage is pushed and deformed into the inside of a ring-space at a periphery of the lid or cover. The material of the can body is deformed by a specific working tool into close contact with the inside of the top face of the cover so that the completed bead is curled to assume a substantially "square" profile when it fills out the cover.

US 3818850 A describes a two-piece can forming method with a bead in the form of a long ellipse in section.

EP 0167183 A1 describes two-piece can forming method with a double bead.

The present invention has been derived on the basis of the above findings, and the present invention provides a method for forming a two-piece can made of a laminated steel sheet as defined by the features of claim 1 or 3. Preferred embodiments are defined in the dependent claims.

BRIEF DESCRIPTION OF THE DRAWINGS

Figure 1 shows an example of conventional aluminum-made two-piece can in side view and longitudinal cross sectional view, (an example of circular arc in cross section).

Figure 2 shows another example of conventional aluminum-made two-piece can in side view and longitudinal cross sectional view, (an example of vertically long ellipse in cross section).

Figure 3 shows a method for forming the bead for conventional aluminum-made two-piece can, (an example of forming method of the bead in flat elliptical shape).

Figure 4 shows the relation of dimensions of can according to the present invention.

Figure 5 shows a method for forming the bead of two-piece can.

Figure 6 shows the method for forming the bead for two-piece can according to the first aspect of the present invention.

Figure 7 shows further example of the method for forming the bead by die-curling method according to the present invention.

Figure 8 shows still another example of a method for forming the bead of two-piece can which does not form part of the present invention, (ellipse).

Figure 9 shows an example of two-piece can which can be formed according to the method according to the first aspect of the present invention, in a state that the mounting cap is clinched to the bead, giving a side view and a longitudinal cross sectional view, (different in the bead tip shape).

Figure 11 shows other example of the method for forming the bead of two-piece can according to a second aspect of the present invention, (upper and lower beads).

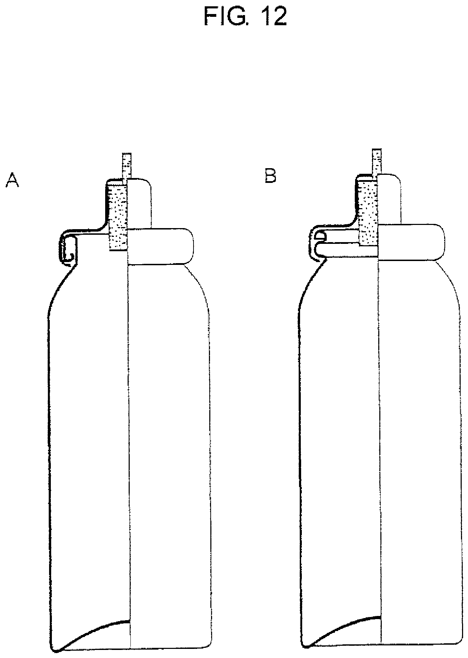

Figure 12 shows another example of two-piece can formed according to the methods of the present invention, in a state that the mounting cap is clinched to the bead, giving a side view and a longitudinal cross sectional view.

Figure 13 shows still other example of a preferred method for forming the bead of two-piece can by spinning working according to the second aspect of the present invention.

BEST MODE FOR CARRYING OUT THE INVENTION

The two-piece can forming methods according to the present invention are described in detail in the following.

The description begins with the laminated steel sheet used as the base material in the present invention.

The object of the present invention is to obtain a two-piece can which has sufficient corrosion resistance and strength as the can, and which is manufactured at a low cost. To attain the object, the base material for forming the two-piece can according to the present invention adopts a laminated steel sheet having the laminate of an organic resin film which has high workability and high corrosion resistance.

Although the steel sheet as the substrate of the laminated steel sheet of the present invention is arbitrary if only the sheet can be formed into a target shape, preferable ones have the compositions given below and are manufactured by the method given below.

(1) a steel sheet of a low carbon steel of approximate range from 0.01 to 0.10% C, being prepared by recrystallization annealing by box annealing;
(2) a steel sheet of a low carbon steel of approximate range from 0.01 to 0.10% C, being prepared by recrystallization annealing by continuous annealing;
(3) a steel sheet of a low carbon steel of approximate range from 0.01 to 0.10% C, being prepared by recrystallization annealing by continuous annealing, followed by over-aging;
(4) a steel sheet of a low carbon steel of approximate range from 0.01 to 0.10% C, being prepared by recrystallization annealing by box annealing or continuous annealing, followed by secondary cold-rolling (cold-rolling after annealing); and
(5) an IF steel (interstitial free steel) of a very low carbon steel of approximate range of 0.003% or less C with the addition of a powerful solid-solution C-fixing element such as Nb and Ti, prepared by recrystallization annealing by continuous annealing. The mechanical characteristics of the steel sheet are not specifically limited if only the steel sheet can be formed into a target shape. To maintain sufficient can strength while not deteriorating the workability, however, the yield strength (YS) is preferably in an approximate range from 220 to 580 MPa. Also for the r value which is an index of plastic anisotropy, 0.8 or higher value is preferred, and the planar anisotropy r of the plastic anisotropy r value is preferably 0.7 or less of the absolute value. The thickness of the steel sheet can be adequately selected depending on the shape of the target can and the necessary can strength. From the point to suppress the cost increase in the steel sheet and in the can, the sheet thickness is preferably in an approximate range from 0.15 to 0.4 mm.

The steel sheet preferably adopts a surface-treated steel sheet using various types of surface treatments. In particular, an optimum one is the surface-treated steel sheet, forming double layer films, namely metallic chromium at lower layer and chromium hydroxide at upper layer, (what is called the "TFS"). Although the coating weight of the metal chromium layer and the chromium hydroxide layer for the TFS is not specifically limited, it is preferable to select the range from 70 to 200 mg/m$^2$ as Cr for the metal chromium layer, and from 10 to 30 mg/cm$^2$ as Cr for the chromium hydroxide layer.

The organic resin film laminating the steel sheet is the following.

The organic resin film structuring the laminated steel sheet according to the present invention is preferably the following to eliminate the possibility of damaging the film during working step as far as possible.

For example, a more preferable organic resin is polyester owing to the superior balance of elongation characteristic and strength characteristic, which balance is necessary for working. Preferable polyester resins include the one prepared by polycondensation of carboxylic acid component and diol component, wherein the dicarboxylic acid component contains terephthalic acid as the main ingredient, and the diol component contains ethylene glycol and/or butylene glycol as the main ingredient. When the terephthalic acid is the main ingredient of the dicarboxylic acid component, isophthalic acid ingredient may be added as other copolymerizing ingredient. For the diol component, when ethylene glycol and/or butylene glycol is the main ingredient, diethylene glycol and cyclohexane diol may be added as other copolymerizing ingredient. Furthermore, while using that type of polyester resin as the main phase, a resin which is incompatible and has 5°C or lower Tg may be added as the sub-phase. In that case, the sub-phase preferably selects at least one of polyethylene, polypropylene, and/or an acid modification thereof, and an ionomer thereof.

On carrying out the present invention, an additive such as pigment, lubricant, and stabilizer may be added to the resin composition specified by the present invention, and, adding to the resin layer specified by the present invention, a resin layer having other functions may be placed as upper layer or interim layer.

The method for laminating the steel sheet is not specifically limited, and an adequate method can be selected, such as thermocompression bonding process for thermocompression of biaxially oriented film or non-oriented film, and extrusion process which uses a T-die or the like to directly form the resin layer on the steel sheet. Those processes were confirmed to give sufficient effect.

(First Embodiment)

The two-piece can made with the method of the First Embodiment is formed by the steps of: using the laminated steel sheet as the base material; forming a can body in a shape of cylinder integrated with bottom by applying repeated several cycles of drawing to a circular blank; applying diametral reduction to the can body at the opening side to a diameter smaller than the diameter of the can body, while satisfying the formulae (1) and (2); and preparing a bead on the can body.

Particularly in the First Embodiment, the bead is formed by forming a first curled part by curling the tip of the opening of the can body outward from the can in circular arc in cross section, followed by forming a second curled part by curling the tip of the opening containing the first curled part in circular arc in cross section. Alternatively, the bead is formed by forming a first curled part by curling the tip of the opening of the can body outward from the can in arc in cross section, followed by forming a second curled part by curling the tip of the opening containing the first curled part in circular arc in cross section, and then by pressing the curled part inward into the can to create a vertically long ellipse in cross section.

$$1.5 \leq h/(R - r) \quad (1)$$

$$d/R \leq 0.25 \quad (2)$$

where, h is the height from the can bottom to the tip of the opening, R is the circular blank positioning radius, r is the radius of the can bottom, and d is the radius of the tip of the opening.

The forming method is described in detail in the following.

(Forming can body in a shape of cylinder integrated with bottom)

To form a can body in a shape of cylinder integrated with bottom from a base material of laminated steel sheet, a suitable method is the one to apply repeated several cycles of drawing to a circular blank, thus to obtain a desired height. The number of drawing cycles and the drawing rate in the pluralities of drawing works can be adequately selected. To simplify the forming process, small number of drawing cycles is preferred. To do this, however, low drawing rate, or severe working, is required. For simplifying the forming process, 10 or smaller number of drawing cycles is preferred. A preferable drawing rate is 0.4 or more for the first drawing cycle of the circular blank, and 0.5 or more for succeeding drawing (redrawing) cycles.

The drawing in the First Embodiment basically adopts pluralities of drawing cycles. There may be adopted a method adding the ironing, or drawing-ironing working.

(Note: The term "ironing" is the work of, aiming to obtain a deep product by further thinning the formed cylindrical article prepared by deep-drawing, ironing the side wall of the non-deep-drawn formed article in the height-direction.)

In the pluralities of drawing cycles, there can be adopted a wall-thinning drawing which decreases the sheet thickness utilizing the bending and unbending deforming at the drawing die shoulder in a state of applying back-tension under the blank-holding force, a wall-thinning drawing and ironing working which adds the ironing to the above working, and the like.

Drawing is affected by lubrication condition. For the laminated steel sheet, the laminate film is soft and has smooth surface so that the film itself functions to increase the lubricant property. Therefore, the drawing does not need special lubricant. For the case of low drawing rate, however, a lubricant is preferably adopted. The kind of lubricant is adequately selected.

During the drawing, the sheet thickness of the side wall of the can body varies from the original sheet thickness. When the variation of sheet thickness is expressed by an average sheet thickness change rate $t/t_0$, (t is the average sheet thickness over the entire can height, and $t_0$ is the original sheet thickness), the drawing-redrawing work likely gives $t/t_0 > 1$, while the drawing-ironing, the wall-thickness thinning-drawing, the wall-thickness thinning-drawing-ironing, and the like tend to give $t/t_0 < 1$. When the damage of laminated steel sheet during working is considered, the average sheet thickness change rate is preferably regulated in a range of $0.5 < t/t_0 < 1.5$.

(Diametral reduction at opening side of the can body)

In an aerosol can, for example, in order to attach the mounting cap to the opening of the can body, the opening end has to be worked by diametral reduction to a diameter smaller than the diameter of the can body. The degree of working of the diametral reduction may be the one for attaining a specific diameter necessary to attach the mounting cap. From the point of eliminating the damage of film as far as possible, however, the relation between the radius r of can body and the radius d of opening end after diametral reduction is preferably d/r > 0.3, and more preferably d/r > 0.4. Applicable methods of diametral reduction include the die-neck method which conducts diametral reduction by pressing the opening end against a die in internal-taper shape, and the pin-neck method which conducts diametral reduction by pressing a rotary tool against the opening end of the can body in the inward radial direction of the can body. From the viewpoint of eliminating the film damage as far as possible, the die-neck method is suitable. As for the die-neck method, it is preferable that the working is given in several stages between the radius r of the can body and the radius d thereof after the final diametral reduction. If the degree of working per stage is large, the possibility of generating wrinkles during the diametral reduction increases. Therefore, the diametral reduction rate, (the diameter after diametral reduction / the diameter before diametral reduction), is preferably regulated to 0.9 or more. Since the film as the laminate of the laminated steel sheet is soft and has smooth surface, the film itself functions to increase the lubricant property. Consequently, the diametral reduction does not need special lubricant. However, from the point to eliminate the film damage caused by the sliding with tool, as far as possible, a lubricant is preferably applied. The type of lubricant is adequately selected.

The forming is requested for the degree of working after diametral reduction to satisfy the formulae (1) and (2).

$$1.5 \leq h/(R - r) \quad (1)$$

$$d/R \leq 0.25 \quad (2)$$

where, h is the height from the can bottom to the tip of the opening, R is the net blank radius, r is the radius of the can bottom, and d is the radius of the tip of the opening.

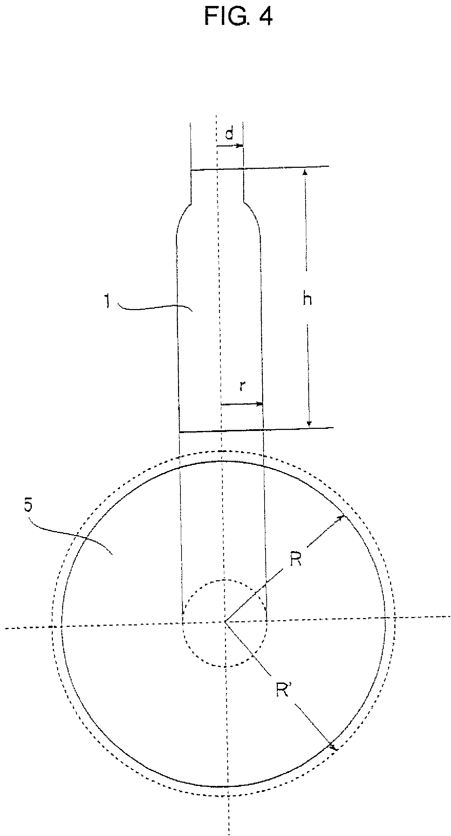

First, the relation among the height h up to the opening end, the bottom radius r, and the net blank radius R is specified to $1.5 \leq h/(R - r)$. Figure 4 shows the relation of dimensions of the can, giving the can body 1 and the circular blank 5 before working. The symbols h, R, r, and d are described above. The symbol R' is the original blank radius before trimming.

On actual drawing, the drawing is conducted from a circular blank having an original blank radius R' larger than the net blank radius R specified by the present invention. The member between R and R' is eliminated by the trimming. The term (h/(R - r)) is an index representing average elongation of the laminated steel sheet in the can height direction before and after the forming.

Then, the relation between the radius d at the tip of the opening and the net blank radius R is specified to $d/R \leq 0.25$. This is an index representing the reduction of the laminated steel sheet in the can circumferential direction at the opening end before and after the forming.

As described before, for forming a can body in a shape of cylinder integrated with bottom from the base material of laminated steel sheet, the method of applying pluralities of drawing cycles to the circular blank to obtain a specified height is suitable. In that case, to obtain the shape of aerosol can described in Non-Patent Document 1, and to avoid the damage of laminated steel sheet during working, the average sheet thickness change rate is regulated to $0.5 < t/t_0 < 1.5$. Then, it is required to establish the relation of $1.5 \leq h/(R - r)$ and $d/R \leq 0.25$.

(Trimming after diametral reduction)

In the working of diametral reduction on the opening side of the can body in a shape of cylinder integrated with bottom to a diameter smaller than the diameter of the can body, the material is compressed in the circumferential direction, which may generate fine surface irregularities at the opening end. The irregularities have a possibility of becoming the origin of the cracks during succeeding curling work for forming the bead. Therefore, from the point of prevention of crack generation, it is effective to remove the opening end showing irregular surface by trimming, in advance, to make the surface of the opening end smooth. That is, applying trimming after diametral reduction can avoid the defects such as crack generation during forming of the bead.

(Forming bead)

In the First Embodiment, the bead is formed by forming a first curled part by curling the tip of the opening of the can body outward the can in circular arc in cross section, followed by forming a second curled part by curling the tip of the opening containing the first curled part in circular arc in cross section. Alternatively, the bead is formed by forming a first curled part by curling the tip of the opening of the can body outward from the can in circular arc in cross section, followed by forming a second curled part by curling the tip of the opening containing the first curled part in circular arc in cross section, and then by pressing the curled part inward into the can to create a vertically long ellipse in cross section. The procedure is the most important element in the First Embodiment. By the procedure, the bead is formed without generating cracks, and the formed bead has a cross section of circular or vertically long elliptical shape, which allows the mounting cap to clinch and fix to the can body, thereby allowing fully functioning as the bead.

When the steel sheet is subjected to can-forming at very high degree of working as in the case of conventional technologies, the steel sheet is hardened by work-hardening, and the ductility thereof deteriorates. Therefore, when the opening end is treated by curling to form the bead, the opening end generates cracks, and there could not form the bead after the diametral reduction on the can body in a shape of cylinder integrated with bottom.

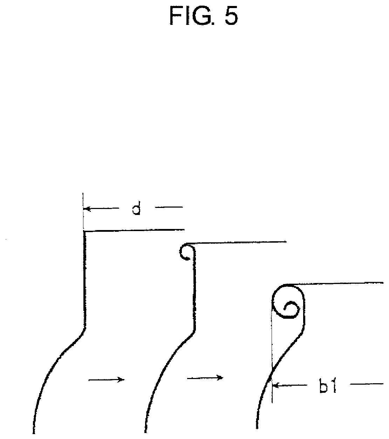

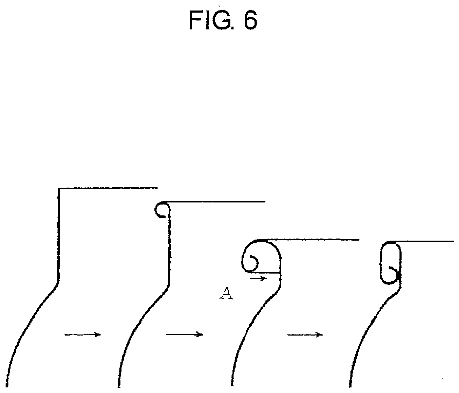

To this point, in the First Embodiment, there was found the method of forming a first curled part at the tip of the opening side of the can body, followed by forming a second curled part at the tip of the opening side including the first curled part. The forming process and the shape of the bead according to the First Embodiment are shown in Fig. 5 and Fig. 6. Figure 5 shows the radius d of the tip of the opening, and the radius b1 of the upper bead. According to Fig. 5, the first curled part curls outward from the can in a shape of circular arc in cross section by a curling with a small curvature not to induce generation of cracks at the opening end. The second curled part curls in circular shape in cross section at the tip of the opening side including the first curled part. The importance is, in the present invention, that the first curled part is formed by curling at a small curvature not to induce cracks at the opening end side. For the case that the one curling work forms the bead having a target shape, the radius of curvature of the curling becomes large, which induces danger of generation of cracks at the opening end of the can body during working. According to the First Embodiment, however, the first curled part is formed applying curling at a small curvature not inducing the generation of cracks at the opening end, followed by forming the second curled part so as the tip of the opening side including the first curled part to become the same size and the same cross sectional shape to the target size and shape. Consequently, the rigidity of the opening end increases, the extension of the opening end in the circumferential direction, which generates the cracks, is suppressed, thus no crack is generated even when the curling is given to the target size and cross sectional shape.

Referring to Fig. 6, the first curled part curls outward from the can in a shape of circular arc in cross section by curling at a small curvature not to induce generation of cracks at the opening end. Then, the second curled part is, after curling the tip of the opening side including the first curled part in circular shape in cross section, pressed inward into the can to become vertically long ellipse in cross section. The reference symbol A designates the pressing direction. In the conventional technologies, on forming the bead in flat ellipse in cross section, the first stage of working forms the circular bead by the curling, and the second stage of working re-forms the formed article into the target flat elliptical shape. In this case, the radius of curvature of the first stage curling is required to become larger than that of the flat ellipse, which increases the degree of working at the tip of the curled part, thereby further likely inducing cracks at the tip of the curled part. According to the First Embodiment, however, the first stage working forms the first curled part by curling of small curvature not to induce generation of cracks at the opening end, followed by forming the second curled part at the tip of the opening side including the first curled part. Consequently, the rigidity of the opening end increases, the extension of the opening end in the circumferential direction, which generates the cracks, is suppressed, thus avoiding the crack generation even during the curling. Furthermore, as the second stage working, the second curled part is pressed to form the bead in flat elliptical shape in cross section while avoiding the crack generation. Although the method for pressing the second curled part is not specifically limited, the spinning working utilizing a roll is preferable in view of accuracy of shape.

According to the First Embodiment, the bead is formed by curling at a small curvature not to induce the generation of cracks during curling. In detail, the curling is conducted preferably under the condition of $b1/d \leq 1.4$, (d is the radius of the tip of the opening after diametral reduction, and b1 is the outer radius of the upper bead). If the condition becomes $b1/d > 1.4$, the cracks likely appear.

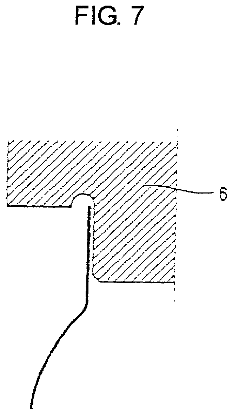

Applicable methods for curling include the die-curling method which presses the opening end of the can body against a curling die having a circular arc shape curved face at the root of the cylindrical insert, and the spinning method which presses the opening end of the can body against the roll having circular arc-shaped curved face. As a typical example, outline of forming by die-curling method is illustrated in Fig. 7. Figure 7 shows the curling die 6.

The above procedure according to the present invention provides the two-piece can. At need, however, heat treatment and other working described below can be given during the working process.

(Heat treatment during working process)

According to the First Embodiment, additional application of heat treatment during a series of working process is effective as the method to decrease the possibility of film damage. That is, the stress on the film accompanied with the strain given to the film during working is relaxed by heat treatment, thereby decreasing the possibility of film separation during succeeding working steps. A suitable condition of the heat treatment for the purpose is the heat treatment at or above the glass transition point of the film and at or below the melting point + 30°C, and more preferably, for the polyester film specified by the present invention, 150°C or above and the melting point + 20°C or below. Furthermore, it is preferable to apply rapid cooling to below the glass transition point of the film within 30 seconds after the heat treatment, more preferably within 10 seconds. The object of the heat treatment is relaxing the internal stress. Therefore, the heat treatment under the condition to relax the internal stress is required. From the viewpoint, the glass transition point is setup as the minimum temperature allowing relaxing the internal stress, and the value is the lower limit of the specification. In addition, for the polyester resin according to the present invention, 150°C is set as the preferable lower limit of the heat treatment. The value is the lower limit of the temperature allowing conducting the treatment in a short time for relaxing the internal stress. That is, at or above the glass transition point, the relaxation of internal stress is obtained, and at or above 150°C, the treatment within a short time is available. The upper limit of the heat treatment temperature is specified considering the deterioration of resin by thermal decomposition. Within the range of the melting point + 30°C, preferably the melting point + 20°C, the resin deterioration caused by thermal decomposition occurs very little. The method of heat treatment is not specifically limited, and it was confirmed that electric furnace, gas-oven, infrared furnace, induction heater, and the like give similar effect. The heating rate and the heating time are adequately selected depending on the effect. However, higher heating rate gives higher efficiency. Although an adequate range of the heating time is approximately from 15 to 60 seconds, the time is not necessarily limited to the range, and an adequate time is selected depending on the effect.

(Other working)

The aerosol can which is the target of the First Embodiment is required to have a pressure strength of 15 kgf/cm$^2$ or more to accept filling of propellant. For the pressure increase inside the can, special care shall be paid to the can bottom. The pressure inside the can body in a shape of cylinder integrated with bottom induces a stress on the side wall of the can body to stretch the can body in the circumferential direction. The member of the can body, however, has already become fully work-hardened by the drawing, thus the can body does not deform under the internal pressure. The portion which needs to consider the effect of the internal pressure is the can bottom. Since the can bottom is subjected to internal pressure in a state that the outer periphery is restricted by the can body, when the internal pressure is high, the can bottom deforms outward from the can. To suppress the deformation of the can bottom under internal pressure, it is effective to increase the sheet thickness at the can bottom and to increase the strength of member, and further it is suitable to form the can bottom in a dome shape protruding inside of the can.

(EXAMPLE 1-1)

A low carbon cold-rolled steel sheet having 0.20 mm of thickness obtained by the continuous annealing process was adopted as the TFS original sheet, which sheet was then laminated on both sides thereof by a polyethylene terephthalate film having 0.025 mm of thickness by the thermal fusion method to prepare a laminated steel sheet. The laminated steel sheet was formed into a circular blank having an original blank radius R' of 42 mm. Then the blank was drawn at about 0.6 of the drawing rate. After that, four redrawing cycles at about 0.8 of the drawing rate were applied to form a can body in a shape of cylinder integrated with bottom having 11 mm of radius r of the can body. After forming a dome protruding inside of the can body at the can bottom by the stretch forming, heat treatment was applied to the can body at 220°C for 30 seconds. Further the trimming was applied to the tip of the opening of the can body, followed by applying pluralities of diametral reduction cycles at about 0.95 of the diametral reduction by the die-neck method to obtain 7.5 mm of opening radius after the diametral reduction. After the diametral reduction, the opening end was further treated by trimming, thus formed a can having 72 mm of height h from the can bottom. The resulted net blank diameter became 80.6 mm, with the degree of working d/R in circumferential direction, specified by the present invention, of 0.19, and the degree of working h/(R - r) in the height direction of 2.24.

To thus prepared can body, the first curled part was formed at the root of the cylinder insert using the die-curling method which presses the opening end of the can body against the curling die having a curved part in circular arc shape with 1.0 mm of radius. The radius b1 of front end of the outer diameter of the first curled part was 9 mm, and b1/d was 1.3. Furthermore, the second curled part was formed at the root of the cylinder insert by curling the tip of the opening including the first curled part in circular arc in cross section using the die-curling method which presses the opening end of the can body against the curling die having a curved part in circular arc shape with 1.5 mm of radius.

The above forming process did not generate cracks on forming particularly the bead. After storing the formed can at 50°C and 98% RH for one month, no rust was generated. Consequently, the can according to the present invention did not generate cracks on forming the bead, and performed sufficient corrosion resistance also in a humid environment.

(EXAMPLE 1-2)

A low carbon cold-rolled steel sheet having 0.20 mm of thickness obtained by the continuous annealing process was adopted as the TFS original sheet, which sheet was then laminated on both sides thereof by a polyethylene terephthalate film having 0.025 mm of thickness by the thermal fusion method to prepare a laminated steel sheet. The laminated steel sheet was formed into a circular blank having an original blank radius R' of 42 mm. Then the blank was drawn at about 0.6 of the drawing rate. After that, four redrawing cycles at about 0.8 of the drawing rate were applied to form a can body in a shape of cylinder integrated with bottom having 11 mm of radius r of the can body. After forming a dome protruding inside of the can body at the can bottom by the stretch forming, heat treatment was applied to the can body at 220°C for 30 seconds. Further the trimming was applied to the tip of the opening of the can body, followed by applying pluralities of diametral reduction cycles at about 0.95 of the diametral reduction rate by the die-neck method to obtain 7.5 mm of opening radius d after the diametral reduction. After the diametral reduction, the tip of the opening was further treated by trimming, thus formed a can having 72 mm of height h from the can bottom. The resulted net blank diameter became 80.6 mm, with the degree of working d/R in the circumferential direction, specified by the present invention, of 0.19, and the degree of working h/(R - r) in the height direction of 2.24.

To thus prepared can body, the first curled part was formed at the root of the cylinder insert using the die-curling method which presses the opening end of the can body against the curling die having a curved part in circular arc shape with 1.0 mm of radius. The radius b1 of front end of the outer diameter of the first curled part was 9 mm, and b1/d was 1.3. Furthermore, the second curled part was formed at the root of the cylinder insert by curling the tip of the opening including the first curled part in circular arc in cross section using the die-curling method which presses the opening end of the can body against the curling die having a curved part in circular arc shape with 2.1 mm of radius. Then, applying the spinning working using a roll to press the second curled part in the can internal direction, thus formed a bead in flat ellipse in cross section. The outer diameter b2 of the bead was 10 mm, and the bead height which is the height between the upper end to the lower end of the bead was 4 mm.

The above forming process did not generate cracks on forming particularly the bead. After storing the formed can at 50°C and 98% RH for one month, no rust was generated. Consequently, the can made according to the present invention did not generate cracks on forming the bead, and performed sufficient corrosion resistance also in a humid environment.

(Comparative Example)

A low carbon cold-rolled steel sheet having 0.20 mm of thickness obtained by the continuous annealing process was adopted as the TFS original sheet, which sheet was then laminated on both sides of TFS by a polyethylene terephthalate film having 0.025 mm of thickness by the thermal fusion method to prepare a laminated steel sheet. The laminated steel sheet was formed into a circular blank having an original blank radius R' of 42 mm. Then the blank was drawn at about 0.6 of the drawing rate. After that, four redrawing cycles at about 0.8 of the drawing rate were applied to form a can body in a shape of cylinder integrated with bottom having 11 mm of radius r of the can body. After forming a dome protruding inside of the can body at the can bottom by the stretch forming, heat treatment was applied to the can body at 220°C for 30 seconds. Further the trimming was applied to the tip of the opening of the can body, followed by applying pluralities of diametral reduction cycles at about 0.95 of the diametral reduction rate by the die-neck method to obtain 7.5 mm of opening radius d after the diametral reduction. After the diametral reduction, the tip of the opening was further treated by trimming, thus formed a can having 72 mm of height h from the can bottom. The tip of the opening after the diametral reduction was further trimmed. Then, the root of the cylinder insert was treated by the die-curling method which presses the opening end of the can body against the curling die having a curved part in circular arc shape with 2.1 mm of radius to curl to the radius of the tip b3 of 11.7 mm. The opening end of the can body generated cracks, and the bead could not be formed.

The two-piece can made according to the First Embodiment is most suitable for the two-piece aerosol can owing to the superior performance. Other than the two-piece aerosol can, the two-piece can of the First Embodiment is suitable for the uses which request the can strength, the corrosion resistance, the appearance, and the low manufacturing cost.

(Second Embodiment)

The laminated steel sheet as the base material applied in the Second Embodiment is the same to that in the First Embodiment.

The two-piece can made with the method of the Second Embodiment is formed by the steps of: using the laminated steel sheet as the base material; forming a can body in a shape of cylinder integrated with bottom by applying repeated several cycles of drawing to a circular blank; applying diametral reduction to the can body at the opening side to a diameter smaller than the diameter of the can body, while satisfying the formulae (1) and (2); and forming a bead on the can body. Particularly in the Second Embodiment, the bead is formed by forming a first curled part by curling the tip of the opening of the can body outward from the can in circular arc in cross section, followed by forming a bead in a shape of vertically long ellipse in cross section by pressing the tip of the opening side containing the first curled part downward toward the can bottom.

$$1.5 \leq h/(R - r) \quad (1)$$

$$d/R \leq 0.25 \quad (2)$$

where, h is the height from the can bottom to the tip of the opening, R is the net blank radius, r is the radius of the can bottom, and d is the radius of the tip of the opening.

The forming method is described in more detail in the following.

The forming of the can body in a shape of a cylinder integrated with a bottom, the diametral reduction at the opening side of the can body, and the trimming after the diametral reduction are the same to those in the First Embodiment.

(Forming the bead)

In the Second Embodiment, the bead is formed by curling the tip of the opening outward from the can in circular arc in cross section, followed by pressing the tip of the of the curled part downward toward the can bottom, thus obtaining the bead in vertically long ellipse in cross section. The procedure is the most important element in the Second Embodiment. By the procedure, the bead is formed without generating cracks, and the formed bead has a cross section of vertically long elliptical shape, which allows the mounting cap to clinch and fix to the can body, thereby allowing fully functioning as the bead.

When the steel sheet is subjected to can-forming at high degree of working as in the case of conventional technologies, the steel sheet is hardened by work-hardening, and the ductility thereof deteriorates. Therefore, when the opening end is treated by curling to form the bead, the opening end generates cracks, and there could not form the bead after applying the diametral reduction to the can body in a shape of cylinder integrated with bottom.

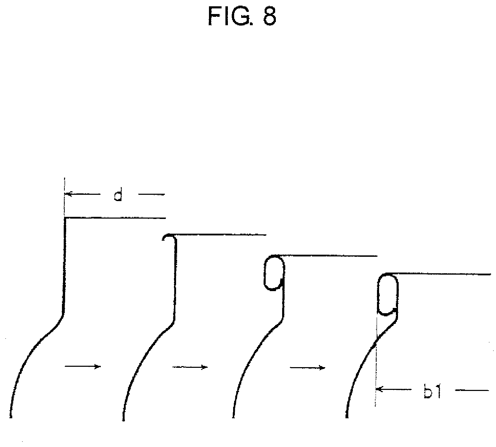

To this point, in the Second Embodiment, there was found the method of forming a bead in a shape of vertically long ellipse in cross section at the tip of the opening by forming a curled part in a shape of circular arc in cross section, followed by pressing the tip of the opening of the curled part downward toward the can bottom. Figure 8 shows the forming process and the shape of the bead of the Second Embodiment. Figure 8 shows the radius d of the tip of the opening, and the outer diameter b1 of the upper bead. According to Fig. 8, the first curled part in a shape of circular arc in cross section is formed by curling work at a small curvature not to induce generation of cracks at the opening end. Then, the tip of the opening of the first curled part is pressed downward toward the can bottom. The importance is that the forming is conducted by curling at a small curvature not to induce cracks at the opening end. For the case of forming the bead having a shape of vertically long ellipse in cross section, the conventional technologies form the bead having a shape of circular arc by curling as the first stage working, followed by re-forming the bead into a target shape of vertically long ellipse as the second stage working. In that case, the radius of curvature in the first stage curling has to be larger than that of the vertically long ellipse, which increases the degree of working at the tip of the curled part, thus more likely inducing crack generation at the portion. According to the invention, however, the first curled part is formed applying curling work at a small curvature not inducing the generation of cracks at the opening end, there can be avoided the generation of cracks which appeared in the conventional technology on forming the circular arc shape bead by curling as the first stage working.

According to the Second Embodiment, the first curled part is formed by curling at a small curvature not to induce generation of cracks during curling. In detail, the curling is conducted preferably under the condition of $b1/d \leq 1.4$, (d is the radius of the tip of the opening after diametral reduction, and b1 is the outer radius of the upper bead). If the condition becomes $b1/d > 1.4$, the cracks likely appear.

The method for curling is almost the same to that of the First Embodiment.

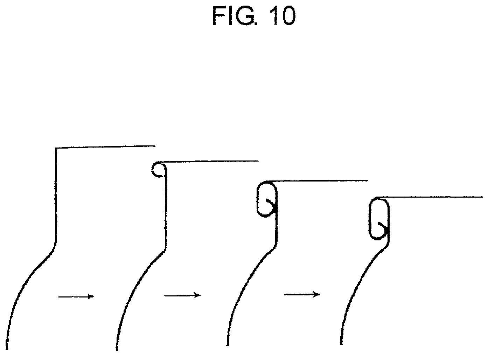

However, on further pressing the first curled part as shown in Fig. 10, when a portion in a shape of circular arc in cross section, formed in the first curling, is placed inside the vertically long ellipse, there attains the advantages of increased strength of the bead and of easy clinching work of the mounting cap to the bead. Alternatively, it is applicable that, after pressing the first curled part, a rotating roll is pressed against the can body from outer side in the can radius direction to complete the cross sectional shape of entire bead.

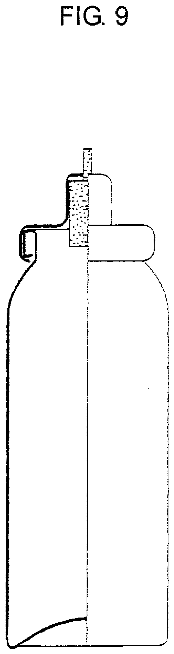

As shown in Fig. 9, since the bead has a structure aiming to fix the mounting cap to the can by clinching, the Second Embodiment adopts a shape of vertically long ellipse in cross section for the bead.

The above procedure provides the two-piece can of the Second Embodiment. At need, however, heat treatment and other working described in the First embodiment can be given during the working process.

(EXAMPLE 2-1)

A low carbon cold-rolled steel sheet having 0.20 mm of thickness obtained by the continuous annealing process was adopted as the TFS original sheet, which sheet was then laminated on both sides thereof by a polyethylene terephthalate film having 0.025 mm of thickness by the thermal fusion method to prepare a laminated steel sheet. The laminated steel sheet was formed into a circular blank having an original blank radius R' of 42 mm. Then the blank was drawn at about 0.6 of the drawing rate. After that, four redrawing cycles at about 0.8 of the drawing rate were applied to form a can body in a shape of cylinder integrated with bottom having 11 mm of radius r of the can body. After forming a dome protruding inside of the can body at the can bottom by the stretch forming, heat treatment was applied to the can body at 220°C for 30 seconds. Further the trimming was applied to the tip of the opening of the can body, followed by applying pluralities of diametral reduction cycles at about 0.95 of the diametral reduction rate by the die-neck method to obtain 7.5 mm of opening radius d after the diametral reduction. After the diametral reduction, the tip of the opening was further treated by trimming, thus formed a can having 72 mm of height h from the can bottom. The resulted net blank diameter became 80.6 mm, with the degree of working d/R in the circumferential direction, specified by the present invention, of 0.19, and the degree of working $h/(R - r)$ in the height direction of 2.24.

To thus prepared can body, the first curled part was formed at the root of the cylinder insert using the die-curling method which presses the opening end of the can body against the curling die having a curved part in circular arc shape with 1.0 mm of radius. The radius b1 of front end of the outer diameter of the first curled part was 9 mm, and b1/d was 1.3. Furthermore, by applying the die-curling method which presses the opening end of the can body against the curling die having a curved part in circular arc shape with 1.25 mm of radius, the tip of the opening side of the first curled part was pressed downward toward the can bottom, thus bringing the outer radius b2 of the bead at the root of the cylinder insert to 10 mm. In that case, the bead height from upper end to lower end of the bead was 4 mm.

The above forming process did not generate cracks on forming particularly the bead. After stored the formed can at 50°C and 98% RH for one month, no rust was generated. Consequently, the can made with the method of the Second Embodiment did not generate cracks on forming the bead, and performed sufficient corrosion resistance also in a humid environment.

The comparative Example is the same to that in the First Embodiment.

The two-piece can made with the method of the Second Embodiment is most suitable for the two-piece aerosol can owing to the superior performance. Other than the two-piece aerosol can, the two-piece can made with the method of the Second Embodiment is suitable for the uses which request the can strength, the corrosion resistance, the appearance, and the low manufacturing cost.

(Third Embodiment)

The laminated steel sheet as the base material in the Third Embodiment is the same to that in the previous embodiments.

The two-piece can made with the method of the Third Embodiment is formed by the steps of: using the laminated steel sheet as the base material; forming a can body in a shape of cylinder integrated with bottom by applying repeated several cycles of drawing to a circular blank; applying diametral reduction to the can body at the opening side to a diameter smaller than the diameter of the can body, while satisfying the formulae (1) and (2); and forming a bead on the can body. Particularly in the Third Embodiment, the bead is formed by forming an upper bead at the opening side of the can body so as the tip of the opening to curl outward from the can, and then by forming a lower bead so as to be connected to the root of the upper bead and to be bulged to project below the upper bead and in a shape of arc in cross section outward the can.

$$1.5 \leq h/(R - r) \qquad (1)$$

$$d/R \leq 0.25 \qquad (2)$$

where, h is the height from the can bottom to the tip of the opening, R is the net blank radius, r is the radius of the can bottom, and d is the radius of the tip of the opening.

The forming method is described in more detail in the following.

The forming of the can body in a shape of a cylinder integrated with a bottom, the diametral reduction at the opening side of the can body and the trimming after the diametral reduction are the same to those in the above description.

(Forming the bead)

In the Third Embodiment, the bead is formed by forming the upper bead at the opening side of the can body so that the tip of the opening curls outward from the can, and further by forming the lower bead so as to be connected to the root of the upper bead and to be bulged to project below the upper bead and in a shape of circular arc in cross section outward the can. The procedure is the most important element in the Third Embodiment. By the procedure, the bead is formed without generating cracks, and the formed bead has a cross section of vertically long elliptical shape as the total of the outer profile of the upper bead and the lower bead, which allows the mounting cap to clinch and fix to the can body, thereby allowing fully functioning as the bead.

When the steel sheet is subjected to can-forming at very high degree of working as in the case of conventional technologies, the steel sheet is hardened by work-hardening, and the ductility thereof deteriorates. Therefore, when the opening end is treated by curling to form the bead, the opening end generates cracks, and there could not form the bead after the diametral reduction on the can body in a shape of cylinder integrated with bottom. Furthermore, when the cross sectional shape of the bead is not in a simple circular arc shape but in vertically long elliptical shape, the forming of bead becomes further difficult. As illustrated in Fig. 3, on forming a bead having a cross section of vertically long elliptical shape, the conventional technologies adopt the method of forming a circular shape bead by curling as the first stage working, and then the bead is re-formed into the target vertically long elliptical shape as the second stage working. In that case, the radius of curvature in the first stage curling has to be larger than that of the vertically long ellipse, which increases the degree of working at the tip of the curled part, thus more likely inducing crack generation at the portion.

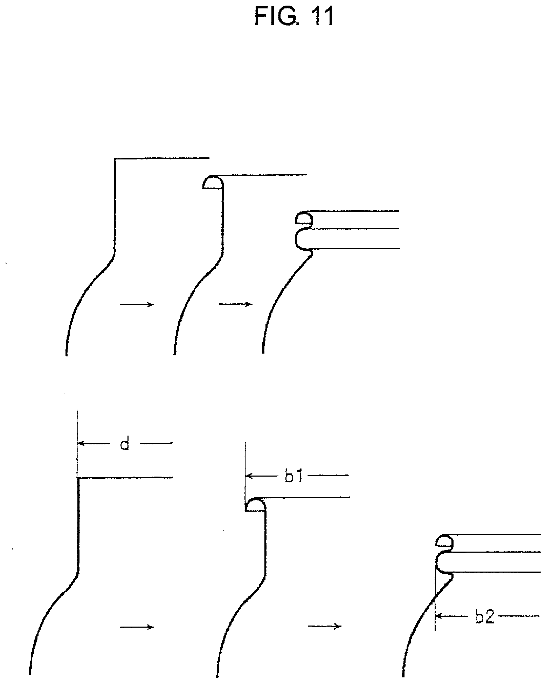

To this point, in the Third Embodiment, there was found the method of forming a bead curving outward in the radius direction of cylinder at the tip of the opening by forming an upper bead at the tip of the opening side, and then forming a lower bead so as to be positioned below the upper bead and to be connected to the root of the upper bead. The forming process and the shape of the bead according to the present invention are given in Fig. 11. According to Fig. 11, the upper bead curls outward from the can by the curling work at a small curvature not to induce the generation of cracks at the opening end, and the lower bead is formed below the upper bead so as to be connected to the upper bead, and to be bulged in a shape of circular arc in cross section outward from the can.

According to the Third Embodiment, the bead is formed by curling work at a small curvature not to induce generation of cracks during curling. In detail, the curling is conducted preferably under the condition of b1/d ≤ 1.4, (d is the radius of the tip of the opening after diametral reduction, and b1 is the outer radius of the upper bead). If the condition becomes b1/d > 1.4, the cracks likely appear.

Applicable methods for curling include the die-curling method which presses the opening end of the can body against a curling die having a circular arc shape curved face at the root of the cylinder insert, and the spinning method which presses the opening end against the roll having circular arc-shaped curved face. As a typical example, outline of forming by die-curling method is illustrated in Fig. 7.

Since the lower bead has a structure aiming to fix the mounting cap by clinching thereof together with the upper bead, it is preferable that the outer profile drawn by the upper bead and the lower bead is in a vertically long elliptical shape as the total. To do this, it is preferable to conduct forming satisfying the relation of b2/b1 = 1, (b1 is the outer radius of the upper bead, and b2 is the outer radius of the lower bead).

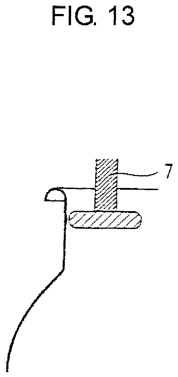

The method for forming the lower bead is not specifically limited if only the forming allows extending outward in the radius direction of the can body. However, the spinning method is preferable in terms of dimensional accuracy, which method conducts spinning from inside the can using a roll-shaped tool. In this case, it is also applicable that the forming is done in b2 > b1 relation, followed by establishing the relation of b2/b1 = 1. Outline of the forming by the spinning method is given in Fig. 13. Figure 13 shows the roll-shaped tool 7.

The cross sectional shape of the upper bead is roughly circular arc. However, no strict limitation is applied to the shape of the upper bead if only the fixation of mounting cap by clinching prevents leak of the contents. To save the material, half-circular cross section is preferred, as shown in Fig. 11. However, adoption of circular arc circumferential length over half circle can further increase the rigidity of the bead. Figure 11 shows the outer radius b1 of the upper bead, the outer radius b2 of the lower bead, and the radius d of the tip of the opening.

The cross sectional shape of the lower bead is not specifically limited if only the lower end of the mounting cap is fully bent and caught-in at the moment of clinching and fixing the mounting cap. The lower bead is formed close to the upper bead. However, there may appear a gap between the upper bead and the lower bead within a range to allow clinching depending on the size of the mounting cap.

The above procedure provides the two-piece can made with the method of the Third Embodiment. At need, however, heat treatment and other working described below can be given during the working process.

The heat treatment and other working applied during the working process are the same to those described before.

(EXAMPLE 3-1)

A low carbon cold-rolled steel sheet having 0.20 mm of thickness obtained by the continuous annealing process was adopted as the TFS original sheet, which sheet was then laminated on both sides thereof by a polyethylene terephthalate film having 0.025 mm of thickness by the thermal fusion method to prepare a laminated steel sheet. The laminated steel sheet was formed into a circular blank having an original blank radius R' of 42 mm. Then the blank was drawn at about 0.6 of the drawing rate. After that, four redrawing cycles at about 0.8 of the drawing rate were applied to form a can body in a shape of cylinder integrated with bottom having 11 mm of radius r of the can body. After forming a dome protruding inside of the can body at the can bottom by the stretch forming, heat treatment was applied to the can body at 220°C for 30 seconds. Further the trimming was applied to the tip of the opening of the can body, followed by applying pluralities of diametral reduction cycles at about 0.95 of the diametral reduction rate by the die-neck method to obtain 7.5 mm of opening radius d after the diametral reduction. After the diametral reduction, the tip of the opening was further treated by trimming, thus formed a can having 72 mm of height h from the can bottom. The resulted net blank diameter became 80.6 mm, with the degree of working d/R in the circumferential direction, specified by the present invention, of 0.1 9, and the degree of working h/(R - r) in the height direction of 2.24.

To thus prepared can body, the upper bead was formed at the root of the cylinder insert using the die-curling method which presses the opening end of the can body against the curling die having a curved part in circular arc shape with 1.25 mm of radius. The radius b1 of front end of the outer diameter of the upper bead was 10 mm, and b1/d was 1.2. Furthermore, the lower bead was formed at the can bottom side of the upper bead by the spinning working pressing a roll-shaped tool from inside the can, which lower bead bulged in a shape of circular arc in cross section outward from the can. The tip radius b2 of the outer diameter of the lower bead was 10 mm. The bead height from the upper end of the upper bead to the lower end of the lower bead was 4 mm.

The above forming process did not generate cracks on forming particularly the bead. After stored the formed can at 50°C and 98% RH for one month, no rust was generated. Consequently, the can according to the present invention did not generate crack on forming the bead, and performed sufficient corrosion resistance also in a humid environment.

Comparative Example is the same to that in the previous embodiments.

The two-piece can made with the method of the Third Embodiment is most suitable for the two-piece aerosol can owing to the superior performance. Other than the two-piece aerosol can, the two-piece can made with the method of the Third Embodiment is suitable for the users which request the can strength, the corrosion resistance, the appearance, and the low manufacturing cost.

**Claims**

1. A method for forming a two-piece can made of a laminated steel sheet, comprising the steps of:

   forming a can body in a shape of cylinder integrated with a bottom by applying repeated several cycles of drawing to a circular blank of the laminated steel sheet;
   **characterized by**:

   applying diametral reduction to the can body at the opening end side to a diameter smaller than the diameter of the can body to form a diametral reduction part, while satisfying the formulae (1) and (2):

$$1.5 \leq h/(R - r) \quad (1),$$

$$d/R \leq 0.25 \quad (2),$$

where, h is the height from the can bottom to the tip of the opening, R is the net blank radius, r is the radius of the can bottom, and d is the radius of the tip of the opening; and forming a bead by forming a first curled part on the diametral reduction part by curling the tip of the opening of the diametral reduction part of the can body outward from the can in a circular arc in cross section, followed by forming a second curled part on the diametral reduction part by curling a portion of the tip of the opening end side containing the first curled part and a portion of the diametral reduction part adjacent to the first curled part in a circular arc in cross section, wherein the forming of the bead further includes pressing, after the first and second curled parts are formed, the curled parts radially inward with respect to the can to create a vertically long ellipse in cross section, and wherein the bead is formed with a cross section which allows a mounting cap to be clinched and fixed to the can body in a subsequent step.

2. The method according to claim 1, comprising a step of fixing a mounting cap to the can body in that the mounting cap is clinched and fixed to the previously formed bead.

3. A method for forming a two-piece can made of a laminated steel sheet, comprising the steps of:

forming a can body in a shape of cylinder integrated with a bottom by applying repeated several cycles of drawing to a circular blank of the laminated steel sheet;
**characterized by**:

applying diametral reduction to the can body at the opening end side to a diameter smaller than the diameter of the can body to form a diametral reduction part, while satisfying the formulae (1) and (2):

$$1.5 \leq h/(R - r) \quad (1),$$

$$d/R \leq 0.25 \quad (2),$$

where, h is the height from the can bottom to the tip of the opening, R is the net blank radius, r is the radius of the can bottom, and d is the radius of the tip of the opening; forming a bead by forming an upper bead at the opening side of the diametral reduction part of the can body so that the tip of the opening is curled outward from the can, and forming a lower bead on the diametral reduction part so as to be connected to the root of the upper bead so that the lower bead bulges outward from the can in a shape of an arc in cross section below the upper bead, such that the outer profile of the upper bead and the lower bead is in a vertically long elliptical shape as the total, and fixing a mounting cap to the can body in that the mounting cap is clinched and fixed to the previously formed lower bead in that a lower end of the mounting cap is fully bent and caught-in at the moment of clinching and fixing the mounting cap.

4. The method according to claim 1 or 2, wherein the bead is formed satisfying b1/d ≤ 1.4, where d is the radius of the tip of the opening, and b1 is the outer radius of the bead.

5. The method according to claim 3, wherein the upper bead is formed satisfying b1/d ≤ 1.4, where d is the radius of the tip of the opening, and b1 is the outer radius of the upper bead.

6. The method according to claim 5, wherein the lower bead is formed satisfying b2/b1 = 1, where b1 is the outer radius of the upper bead and b2 is the outer radius of the lower bead.

7. The method according to any of claims 1 to 6, wherein the laminated steel sheet is a steel sheet laminated by a polyester resin.

8. The method according to claim 7, wherein the polyester resin is prepared by polycondensation of a dicarboxylic acid component and a diol component, wherein the dicarboxylic acid component contains terephthalic acid as the main ingredient, and the diol component contains ethylene glycol and/or butylene glycol as the main ingredient.

9. The method according to claim 8, further comprising an organic resin as the laminate of the laminated steel sheet, which organic resin contains the polyester resin as the main phase, and a resin which is incompatible and has 5°C or lower Tg as the sub-phase.

10. The method according to claim 9, wherein the resin existing as the sub-phase is a resin selected from the group consisting of: polyethylene, an acid modification thereof, an ionomer thereof, polypropylene, an acid modification thereof, and an ionomer thereof.

11. The method according to any of claims 1 to 10, wherein the steel sheet as the substrate of the laminated steel sheet contains at least one of the following:

(1) a steel sheet of a low carbon steel of approximate range from 0.01 to 0.10% C, being prepared by recrystallization annealing by box annealing;
(2) a steel sheet of a low carbon steel of approximate range from 0.01 to 0.10% C, being prepared by recrystallization annealing by continuous annealing;
(3) a steel sheet of a low carbon steel of approximate range from 0.01 to 0.10% C, being prepared by recrystallization annealing by continuous annealing, followed by over-aging;
(4) a steel sheet of a low carbon steel of approximate range from 0.01 to 0.10% C, being prepared by recrystallization annealing by box annealing or continuous annealing, followed by secondary cold-rolling (cold-rolling after annealing); and
(5) an IF steel (interstitial free steel) of a very low carbon steel of approximate range of 0.003% or less C with the addition of solid-solution C-fixing element, prepared by recrystallization by continuous annealing.

12. The method according to any of claims 1 to 11, wherein the forming of two-piece can made of the laminated steel sheet includes ironing adding to the deep drawing.

13. The method according to any of claims 1 to 12, wherein the diametral reduction of the laminated steel sheet is at least one of die-curling method and spinning method.

**Patentansprüche**

1. Ein Verfahren zum Formen einer zweiteiligen Dose, die aus einem laminierten Stahlblech hergestellt ist, mit den Schritten:

Formen eines Dosenkörpers in einer Form eines Zylinders mit integriertem Boden durch Anwenden verschiedener wiederholter Zyklen eines Ziehens auf einen kreisförmigen Rohling des laminierten Stahlblechs,
**gekennzeichnet durch**:

Anwenden einer Durchmesserverringerung auf den Dosenkörper an der Öffnungsendseite zu einem Durchmesser, der kleiner ist als der Durchmesser des Dosenkörpers, um ein Teil mit verringertem Durchmesser zu formen, während die Bedingungen (1) und (2) erfüllt sind:

$$1{,}5 \leq h/(R - r) \qquad (1),$$

$$d/R \leq 0{,}25 \qquad (2),$$

wobei h die Höhe von dem Dosenboden zu dem Außenende der Öffnung ist, R der Rohling-Nettoradius ist, r der Radius des Dosenbodens ist, und d der Radius des Außenendes der Öffnung ist, und
Formen eines Wulstrandes **durch** Formen eines ersten eingerollten Teils an dem Teil mit verringertem Durchmesser durch Einrollen des Außenendes der Öffnung des Teils mit verringertem Durchmesser des Dosenkörpers nach Außen von der Dose in einem kreisförmigen Bogen im Querschnitt, gefolgt von einem Formen eines zweiten eingerollten Teils an dem Teil mit verringertem Durchmesser **durch** Einrollen eines Abschnitts des Außenendes der Öffnungsendseite, welcher den ersten eingerollten Teil enthält, und eines Abschnittes des Teils mit verringertem Durchmesser angrenzend an das erste eingerollte Teil in einen kreisförmigen Bogen im Querschnitt, wobei das Formen des Wulstrandes ferner ein Pressen, nachdem die ersten und zweiten eingerollten Teile geformt sind, der eingerollten Teile radial nach Innen bezüglich der Dose umfasst, um eine vertikal längliche Ellipse im Querschnitt zu erzeugen, und wobei der Wulstrand mit einem Querschnitt geformt ist bzw. wird, der es ermöglicht, dass ein Montagedeckel an dem Dosenkörper in einem nachfolgenden Schritt zu clinchen und zu befestigen ist.

2. Das Verfahren gemäß Anspruch 1, mit einem Schritt eines Befestigens eines Montagedeckels an dem Dosenkörper dadurch, dass der Montagedeckel an dem zuvor geformten Wulstrand geclincht und befestigt wird.

3. Ein Verfahren zum Formen einer zweiteiligen Dose, die aus einem laminierten Stahlblech hergestellt ist, mit den Schritten:

Formen eines Dosenkörpers in einer Form eines Zylinders mit integriertem Boden durch Anwenden verschiedener wiederholter Zyklen eines Ziehens auf einen kreisförmigen Rohling des laminierten Stahlblechs,
**gekennzeichnet durch**:

Anwenden einer Durchmesserverringerung auf den Dosenkörper an der Öffnungsendseite zu einem Durchmesser, der kleiner ist als der Durchmesser des Dosenkörpers, um ein Teil mit verringertem Durchmesser zu formen, während die Bedingungen (1) und (2) erfüllt sind:

$$1,5 \leq h/(R - r) \qquad (1),$$

$$d/R \leq 0,25 \qquad (2),$$

wobei h die Höhe von dem Dosenboden zu dem Außenende der Öffnung ist, R der Rohling-Nettoradius ist, r der Radius des Dosenbodens ist, und d der Radius des Außenendes der Öffnung ist,
Formen eines Wulstrandes **durch** Formen eines oberen Wulstrandes an der Öffnungsseite des Teils mit verringertem Durchmesser des Dosenkörpers so, dass das Außenende der Öffnung von der Dose nach Außen eingerollt wird, und Formen eines unteren Wulstrandes an dem Teil mit verringertem Durchmesser so, dass es mit dem Fuß des oberen Wulstrandes verbunden ist, derart, dass der untere Wulstrand von der Dose in einer Form eines Bogens im Querschnitt unter dem oberen Wulstrand nach Außen ausgebaucht ist, derart, dass das Außenprofil des oberen Wulstrandes und des unteren Wulstrandes insgesamt die Form einer vertikal länglichen Ellipsenform besitzt, und
Befestigen eines Montagedeckels an dem Dosenkörper dadurch, dass der Montagedeckel an dem zuvor geformten unteren Wulstrand geclincht und befestigt wird, indem ein unteres Ende des Montagedeckels in dem Moment des Clinchens und Befestigens des Montagedeckels vollständig umgebogen und gefangen ist bzw. wird.

4. Das Verfahren gemäß Anspruch 1 oder 2, wobei der Wulstrand gebildet wird, wobei $b1/d \leq 1,4$ erfüllt ist, wobei d der Radius des Außenendes der Öffnung und b1 der Außenradius des Wulstrandes ist.

5. Das Verfahren gemäß Anspruch 3, wobei der obere Wulstrand geformt wird, wobei $b1/d \leq 1,4$ erfüllt ist, wobei d der Radius des Außenendes der Öffnung und b1 der Außenradius des oberen Wulstrandes ist.

6. Das Verfahren gemäß Anspruch 5, wobei der untere Wulstrand geformt wird, wobei $b2/b1 = 1$ erfüllt ist, wobei b1 der Außenradius des oberen Wulstrandes und b2 der Außenradius des unteren Wulstrandes ist.

7. Das Verfahren gemäß einem der Ansprüche 1 bis 6, wobei das laminierte Stahlblech ein Stahlblech ist, das mit einem Polyesterharz laminiert ist.

8. Das Verfahren gemäß Anspruch 7, wobei das Polyesterharz hergestellt ist durch Polykondensation einer Dicarbonsäurekomponente und einer Diolkomponente, wobei die Dicarbonsäurekomponente Terephthalsäure als Hauptbestandteil enthält, und die Diolkomponente Ethylenglykol und/oder Butylenglykol als Hauptbestandteil enthält.

9. Das Verfahren gemäß Anspruch 8, ferner mit einem organischen Harz als das Laminat des laminierten Stahlblechs, wobei das organische Harz das Polyesterharz als Hauptphase und ein Harz, welches inkompatibel ist und einen Tg von 5°C oder weniger aufweist, als die Nebenphase enthält.

10. Das Verfahren gemäß Anspruch 9, wobei das als die Nebenphase vorliegende Harz ein Harz ist, das aus der Gruppe ausgewählt ist, die besteht aus: Polyethylen, einer Säuremodifikation davon, einem Ionomer davon, Polypropylen, einer Säuremodifikation davon und einem Ionomer davon.

11. Das Verfahren gemäß einem der Ansprüche 1 bis 10, wobei das Stahlblech als das Substrat des laminierten Stahlblechs zumindest eines der Folgenden enthält:

(1) ein Stahlblech eines Stahls mit niedrigem Kohlenstoffgehalt in dem ungefähren Bereich von 0,01 bis 0,10% C, das hergestellt ist durch Rekristallisationsanlassen durch Kastenglühbehandlung bzw. -anlassen,
(2) ein Stahlblech eines Stahls mit niedrigem Kohlenstoffgehalt in dem ungefähren Bereich von 0,01 bis 0,10% C, das hergestellt ist durch Rekristallisationsanlassen durch kontinuierliches Anlassen bzw. Durchlaufglühen,
(3) ein Stahlblech eines Stahls mit niedrigem Kohlenstoffgehalt in dem ungefähren Bereich von 0,01 bis 0,10% C, das hergestellt ist durch Rekristallisationsanlassen durch kontinuierliches Anlassen bzw. Durchlaufglühen gefolgt von Überaltern,

(4) ein Stahlblech eines Stahls mit niedrigem Kohlenstoffgehalt in dem ungefähren Bereich von 0,01 bis 0,10% C, das hergestellt ist durch Rekristallisationsanlassen durch Kastenglühbehandlung bzw. -anlassen oder kontinuierliches Anlassen bzw. Durchlaufglühen, gefolgt durch sekundäres Kaltwalzen (Kaltwalzen nach dem Anlassen), und

(5) einen IF-Stahl (Stahl ohne interstitielle Einlagerung) eines Stahls mit sehr niedrigem Kohlenstoffgehalt in dem ungefähren Bereich von 0,003% oder weniger C mit dem Zusatz eines Feststoff-Lösungs-Kohlenstoff-Fixierungselements, hergestellt durch Rekristallisation durch kontinuierliches Anlassen bzw. Durchlaufglühen.

12. Das Verfahren gemäß einem der Ansprüche 1 bis 11, wobei das Formen der zweiteiligen Dose aus dem laminierten Stahlblech ein Tiefstreckziehen als Zusatz zu dem Tiefziehen aufweist.

13. Das Verfahren gemäß einem der Ansprüche 1 bis 12, wobei die Durchmesserverringerung des laminierten Stahlblechs zumindest eines von einem Matrizen-Rollverfahren und einem Drehverfahren ist.

**Revendications**

1. Procédé de formage d'une boîte en deux pièces en tôle d'acier laminée, comprenant les stades de :

formation d'un corps de boîte en une forme de cylindre intégré à un fond, en appliquant plusieurs cycles répétés d'étirage à une ébauche circulaire de la tôle d'acier laminée ;
**caractérisé par** :

l'application d'une réduction de diamètre au corps de la boîte, du côté de l'extrémité d'ouverture, à un diamètre plus petit que le diamètre du corps de la boîte pour former une partie de réduction de diamètre, tout en satisfaisant aux formules (1) et (2) :

$$1,5 \leq h/(R - r) \qquad (1),$$

$$d/R \leq 0,25 \qquad (2),$$

dans lesquelles h est la hauteur du fond de la boîte au bout de l'ouverture, R est le rayon net de l'ébauche, r est le rayon du fond de la boîte et d est le rayon du bout de l'ouverture et
la formation d'un bourrelet, en formant une première partie roulée sur la partie de réduction de diamètre, en roulant le bout de l'ouverture de la partie de réduction de diamètre du corps de la boîte vers l'extérieur de la boîte, suivant un arc circulaire en section transversale, suivie de la formation d'une deuxième partie roulée sur la partie de réduction de diamètre, en roulant une partie du bout, du côté de l'extrémité d'ouverture contenant la première partie roulée, et une partie de la partie de réduction du diamètre, voisine de la première partie roulée, suivant un arc circulaire en section transversale, la formation du bourrelet comprenant, en outre, le repoussage, après que les première et deuxième parties roulées ont été formées, des partie roulées radialement vers l'intérieur par rapport à la boîte pour créer une ellipse longue verticalement en section transversale, et dans lequel le bourrelet est formé en ayant une section transversale, qui permet d'assujettir et de fixer un capuchon de montage au corps de la boîte dans un stade ultérieur.

2. Procédé suivant la revendication 1, comprenant le stade de fixation d'un capuchon de montage au corps de la boîte par le fait que le capuchon de montage est assujetti et fixé au bourrelet formé préalablement.

3. Procédé de formage d'une boîte en deux pièces en tôle d'acier laminée, comprenant les stades de :

formation d'un corps de boîte en une forme de cylindre intégré à un fond, en appliquant plusieurs cycles répétés d'étirage à une ébauche circulaire de la tôle d'acier laminée ;
**caractérisé par** :

l'application d'une réduction de diamètre au corps de la boîte, du côté de l'extrémité d'ouverture, à un diamètre plus petit que le diamètre du corps de la boîte pour former une partie de réduction de diamètre,tout en satisfaisant aux formules (1) et (2) :

$$1,5 \leq h/(R - r) \qquad (1),$$

$$d/R \leq 0,25 \qquad (2),$$

dans lesquelles h est la hauteur du fond de la boîte au bout de l'ouverture, R est le rayon net de l'ébauche, r est le rayon du fond de la boîte et d est le rayon du bout de l'ouverture ;

la formation d'un bourrelet, en formant un bourrelet supérieur, du côté de l'ouverture de la partie de réduction de diamètre du corps de la boîte, de manière à ce que le bout de l'ouverture soit roulé vers l'extérieur de la boîte, et la formation d'un bourrelet extérieur sur la partie de réduction de diamètre, de manière à ce qu'il soit relié à la racine du bourrelet supérieur, de façon à ce que le bourrelet inférieur soit bombé vers l'extérieur de la boîte, suivant la forme d'un arc en section transversale, en dessous du bourrelet supérieur, de façon à ce que le profil extérieur du bourrelet supérieur et du bourrelet inférieur soit sous une forme elliptique longue verticalement au total et la fixation d'un capuchon de montage au corps de la boîte, par le fait que le capuchon de montage est assujetti et fixé au bourrelet intérieur formé préalablement, en ce qu'une extrémité inférieure du capuchon de montage est courbée complètement et prise au moment de l'assujettissement et de la fixation du capuchon de montage.

4. Procédé suivant la revendication 1 ou 2, dans lequel le bourrelet est formé, en satisfaisant b1/d ≤ 1,4, dans laquelle d est le rayon du bout de l'ouverture et b1 est le rayon extérieur du bourrelet.

5. Procédé suivant la revendication 3, dans lequel le bourrelet supérieur est formé en satisfaisant b1/d ≤ 1,4, dans laquelle d est le rayon du bout d'ouverture et b1 est le rayon extérieur du bourrelet supérieur.

6. Procédé suivant la revendication 5, dans lequel le bourrelet inférieur est formé en satisfaisant b2/b1 = 1, dans laquelle b1 est le rayon extérieur du bourrelet supérieur et b2 est le rayon extérieur du bourrelet inférieur.

7. Procédé suivant l'une quelconque des revendications 1 à 6, dans lequel la tôle d'acier laminée est une tôle d'acier laminée par une résine de polyester.

8. Procédé suivant la revendication 7, dans lequel la résine de polyester est préparée par polycondensation d'un acide dicarboxylique et d'un diol, l'acide dicarboxylique contenant de l'acide téréphtalique comme ingrédient principal et le diol contenant de l'éthylène glycol et/ou du butylène glycol comme ingrédient principal.

9. Procédé suivant la revendication 8, comprenant, en outre, une résine organique comme laminé de la tôle d'acier laminée, laquelle résine organique contient la résine de polyester comme phase principale et une résine, qui est incompatible et qui a un Tg inférieur ou égal à 5°C comme sous-phase.

10. Procédé suivant la revendication 9, dans lequel la résine existant sous la forme de la sous-phase est une résine choisie dans le groupe consistant en : du polyéthylène, une modification par un acide de celui-ci, un ionomère de celui-ci, du polypropylène, une modification par un acide de celui-ci et un ionomère de celui-ci.

11. Procédé suivant l'une quelconque des revendications 1 à 10, dans lequel la tôle d'acier comme substrat de la tôle d'acier laminée contient au moins l'un de ce qui suit :

(1) une tôle d'acier d'un acier à bas carbone dans une plage d'environ 0,01 à 0,10% de C, préparée par recuit de recristallisation ou recuit en caisse ;
(2) une tôle d'acier en acier à bas carbone dans une plage d'environ 0,01 à 0,10% de C, préparée par recuit de recristallisation ou recuit continu ;
(3) une tôle d'acier en acier à bas carbone dans une plage d'environ 0,01 à 0,10% de C, préparée par recuit de recristallisation ou recuit continu, suivi d'un vieillissement prolongé;
(4) une tôle d'acier en acier à bas carbone dans une plage d'environ 0,01 à 0,10% de C, préparée par recuit de recristallisation ou recuit continu, suivi d'un laminage à froid secondaire (laminage à froid après recuit) et
(5) un acier IF (acier interstitiel libre) en un acier à très bas carbone dans une plage inférieure ou égale à environ 0,003% avec l'addition d'un élément de fixation du C en solution solide, préparé par recristallisation par recuit continu.

12. Procédé suivant l'une quelconque des revendications 1 à 11, dans lequel le formage de deux pièces de la tôle d'acier laminée comprend un étirage s'ajoutant à l'emboutissage profond.

13. Procédé suivant l'une quelconque des revendications 1 à 12, dans lequel la réduction du diamètre de la tôle d'acier laminée est au moins l'un d'un procédé de matriçage-roulage et d'un procédé par emboutissage au tour.

FIG. 1

FIG. 2

FIG. 3

# FIG. 4

FIG. 5

FIG. 6

FIG. 7

## FIG. 8

FIG. 9

FIG. 10

## FIG. 11

FIG. 12

A

B

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63168238 A
- JP 9039975 A
- JP 1228567 A
- JP 10024973 A
- JP 6462232 A
- JP 2004276068 A
- JP 50129474 A
- JP 8309465 A
- US 3818850 A
- EP 0167183 A1